# EUROPEAN PATENT APPLICATION

(11) **EP 3 187 266 A1**
(43) Date of publication of application: **05.07.2017**
(21) Application number: 14900857.5
(22) Date of filing: 27.08.2014
(51) Int. Cl.: B01L 9/00, H01M 10/46, H02J 7/00, B01L 3/02

(54) **CHARGER FOR ELECTRICALLY POWERED PIPETTE**

(71) Applicant: A & D Company, Limited, Toshima-ku Tokyo 170-0013 (JP)
(72) Inventor: IZUMO, Naoto, Kitamoto-shi Saitama 364-8585 (JP); ODAGIRI, Tsutomu, Kitamoto-shi Saitama 364-8585 (JP)
(74) Representative: dompatent von Kreisler Selting Werner - Partnerschaft von Patent- und Rechtsanwälten mbB
(86) International application number: PCT/JP2014/072376
(87) International publication number: WO 2016/030977

(57) **Abstract**

Provided is a battery charger suitable for an electric pipette, improved in degree of installation freedom and expandability. A battery charger (1) includes a pipette receiver (11), left and right arms (12 and 13) extending forward from the pipette receiver (11), charging electrodes (18) that come into contact with pipette side electrodes (102) exposed to the outside of a main body of an electric pipette (100) and charge a battery (103) of the electric pipette (100), a power delivering port (16), and preferably, a power relay port (17), and a pipette receiver rear surface (11b) is formed with a vertical plane, and the vertical plane acts as a fixing part (14).

## Description

### Technical Field

The present invention relates to a battery charger for an electric pipette, which charges an electric pipette.

### Background Art

A liquid dispensing device, which is hand-held and operated, called a pipette or micro pipette (hereinafter, collectively referred to as a pipette) treats a volume change caused by movement of a movable piston included inside the pipette as an air volume change, and a liquid with a bulk corresponding to the air volume change is suctioned in and discharged from a pipette chip fitted to a tip end of the pipette.

Two kinds of pipettes, manual and electric pipettes have been distributed, and an electric pipette is cordlessly operated by using a charged battery incorporated inside a main body of the electric pipette, so that the electric pipette has advantages that no matter who operates the electric pipette, it enables stable dispensing so as to suction and discharge a liquid by a prescribed operation, and enables sequential dispensing so as to quickly dispense a large number of reagents and alleviate operator fatigue in a case where the number of samples is large. However, when dispensing is performed a number of times, a large amount of electric energy is consumed, so that the battery frequently needs to be charged.

For example, Patent Literature 1 discloses a system in which a charging connector is incorporated inside a main body of an electric pipette, and a plug is inserted into this charging connector and the battery is charged. Patent Literature 2 discloses a system in which a charging connector incorporated inside a main body of an electric pipette is connected to a metal electrode exposed to the outside of the main body of the electric pipette, and this electric pipette-side electrode is brought into contact with a charging electrode of a battery charger and the battery is charged.

The latter system is a system of charging by using a battery charger, however, there is an idea that storage of a pipette in an upright position prevents the inside of the pipette from being contaminated by a sample liquid, and therefore, a standing type (charging stand) to hold an electric pipette in a hung-down state is adopted. As such a charging stand, there are known a charging stand for one electric pipette on which one electric pipette is hung, and a charging stand for multiple pipettes on which multiple electric pipettes are hung (refer to Non-Patent Literature 1).

### Citation List

### Patent Literatures

Patent Literature 1: Japanese Published Unexamined Patent Application No. H10-263421
Patent Literature 2: Japanese Published Unexamined Patent Application No. 2013-195431

### Non-Patent Literature

Non-Patent Literature 1: "Product Information/Electric Pipette," [online], Sartorius Japan K. K. , searched on July 24, 2014, Internet <URL: http://www.sartorius.co.jp/biohit/products/e_eline/spec/>

### Summary of the Invention

### Problems to be Solved by the Invention

The above-described charging stand needs to have an arm and a stand height set to about 30 to 40 cm to hold an electric pipette without contact with a stand installation surface, and needs to have a stand base portion set to be comparatively large area to prevent an electric pipette from falling. On the other hand, in a biotechnology related laboratories or at clinical examination sites involving frequent use of pipettes, many instruments are packed onto a work table, and generally, there is no space for placing a charging stand, so that securing a place for a charging stand and charging simplification have become incompatible problems. The only available option for the above-described charging stand is to be installed on a table, and charge only a prescribed number of pipettes.

The present invention was made based on the problems in the conventional technologies, and an object thereof is to provide a battery charger suitable for an electric pipette, improved in the degree of installation freedom and expandability.

### Means for Solving the Problems

In order to solve the above-described problems, a battery charger for an electric pipette according to an aspect of the present invention includes: a pipette receiver; left and right arms each extending forward from the pipette receiver; a charging electrode to be in contact with a pipette side electrode exposed to outside of a main body of the electric pipette, for charging a battery of the electric pipette; and a power delivering port for delivering electricity to the charging electrode, wherein a rear surface of the pipette receiver is formed with a vertical plane, and the vertical plane acts as a fixing part.

The battery charger for an electric pipette according to this aspect has a simple configuration in which an electric pipette is hung on and held by the left and right arms and the pipette receiver, and the rear surface of the pipette receiver is used as a fixing part as it is, so that first, the battery charger can be configured compact in size. Second, the battery charger for an electric pipette according to this aspect can be attached to a side surface of a popularized work table, testing bench, shelf, or the like by using the fixing part being a vertical plane, and therefore, the battery charger can be installed in an arbitrary location and a vacant space with a high degree of freedom.

In the aspect described above, preferably, the power delivering port is provided on a lower surface of the pipette receiver. That is, by setting the power delivering port on a lower surface of the pipette receiver, an electric pipette hung down and held in front of the pipette receiver does not interfere with a power supply cable, and in addition, a sample liquid adhering to the electric pipette can be positionally prevented from splattering on the power delivering port.

In the aspect described above, preferably, the power delivering port and a power relay port are provided on a lower surface of the pipette receiver. Accordingly, by connecting one battery charger and another battery charger to each other in series by connecting a power delivering port of the one battery charger and a power relay port of the other battery charger by a relay cable, a plurality of pipettes can be charged simultaneously, so that the battery chargers can be provided with expandability. In addition, an installation location of the battery charger can be selected without being limited by the position of the commercial power supply.

In the aspect described above, preferably, each of the power delivering port and the power relay port has a connector, and is capable of being connected to each other by using a cable provided with plugs. Accordingly, just by connecting the connectors by a cable with plugs, the above-described expanded use is possible at a user level.

In the aspect described above, preferably, each of the power delivering port and the power relay port has a surrounding wall that extends downward. Accordingly, a sample liquid adhering to an electric pipette can be structurally prevented from splattering on the power delivering port.

In the aspect described above, preferably, the battery charger for an electric pipette has a vertical configuration formed with an upper case and a lower case, and an outer peripheral portion of the lower case comes into contact with an inner peripheral portion of the upper case and the lower case is formed so as to be housed in the upper case. An electric pipette is fitted to the battery charger for an electric pipette from above, so that during this operation, even if a sample liquid adhering to the electric pipette splatters on the battery charger, the liquid adhering to the upper case runs down the upper case and directly drips down, so that the liquid can be structurally prevented from entering the inside of the battery charger.

In the aspect described above, preferably, a light emitting indicator for showing an electric condition is provided on an upper surface of the pipette receiver. Accordingly, an electric condition is shown at a highly visible position on an upper portion of the battery charger.

### Effect of the Invention

The present invention provides a battery charger suitable for an electric pipette, improved in degree of installation freedom and expandability.

### Best Mode for Carrying Out the Invention

Next, a preferred embodiment of the present invention is described with reference to the drawings.

### (Configuration of Battery Charger)

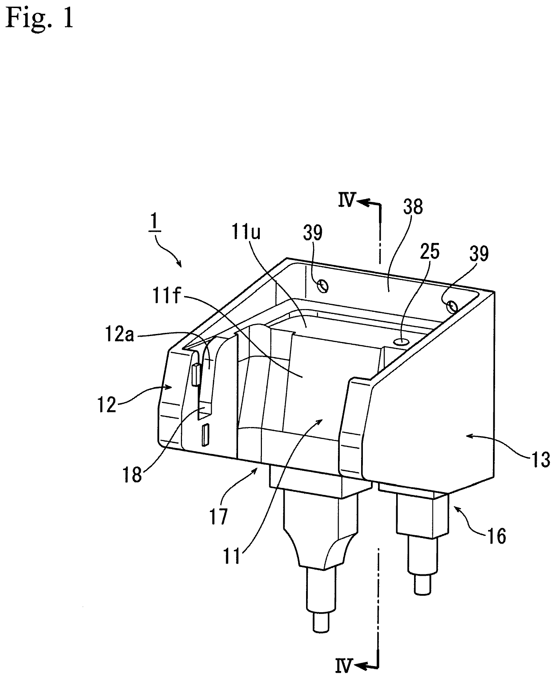

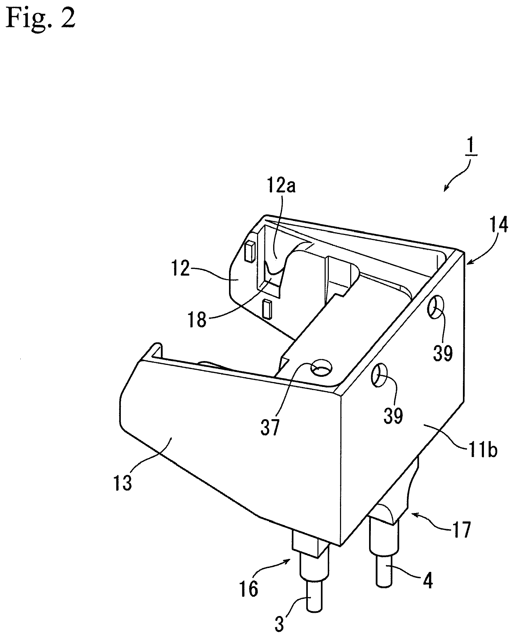

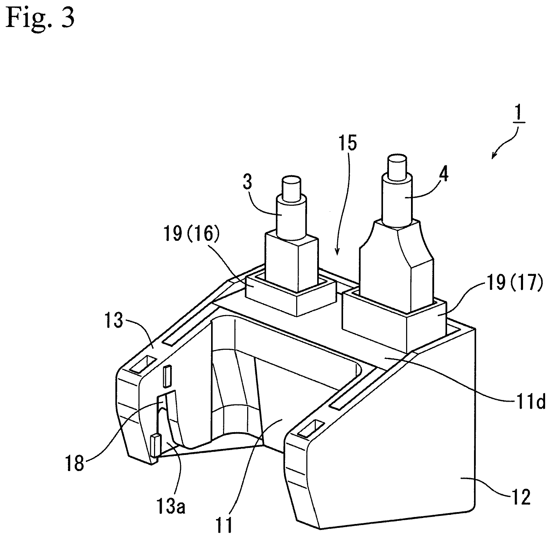

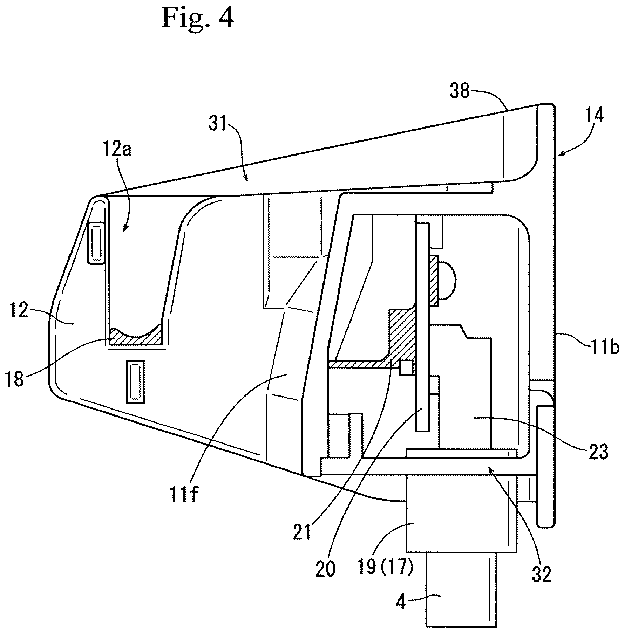

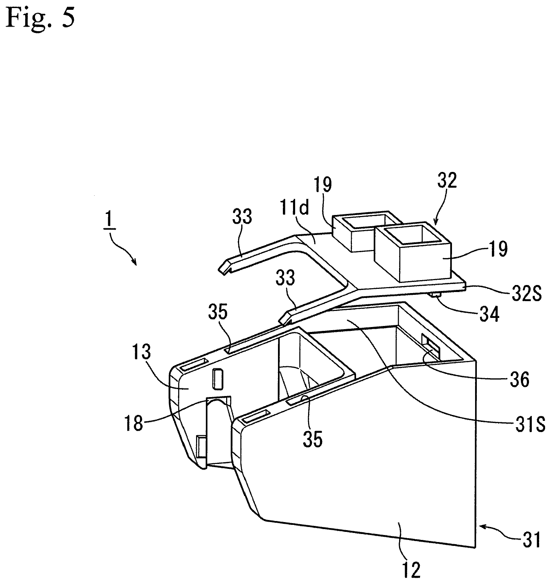

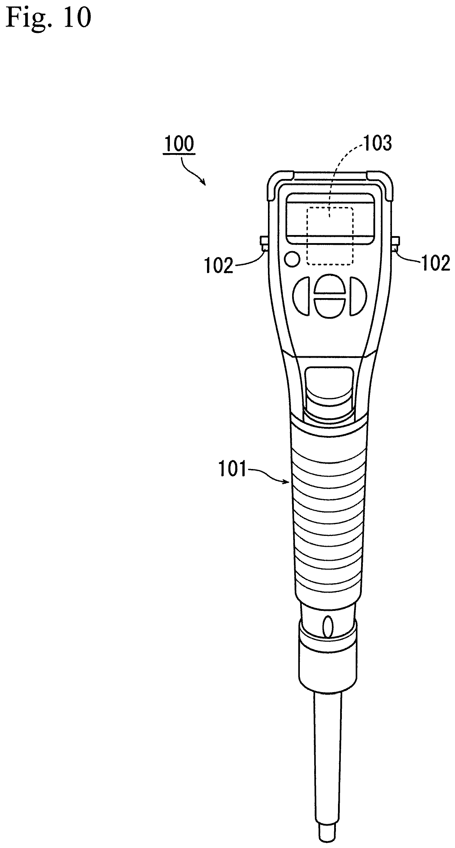

Fig. 1 is a front perspective view of a battery charger 1 according to an embodiment of the present invention, Fig. 2 is a rear perspective view of the battery charger 1, Fig. 3 is a view of a connector part of the battery charger 1, Fig. 4 is a sectional view of the battery charger 1 (sectional view taken along line IV-IV in Fig. 1), and Fig. 5 is an exploded perspective view of the battery charger 1. Fig. 10 shows an example of an electric pipette compatible with the battery charger 1.

This battery charger 1 is a device for charging an electric pipette 100 that includes pipette side electrodes 102 on left and right side surfaces of a main body 101 as shown in Fig. 10. The electric pipette 100 is hand-held and operated, and inside the main body 101, in order from the lower side, a cylinder, a piston inserted in the cylinder so as to reciprocate in the up-down direction inside the cylinder, a ball screw that is joined to the piston to move the piston in the up-down direction, a stepping motor that drives and rotates the ball screw in both forward and reverse directions, an electrical board and a battery 103 to drive the motor and the electrical board, provided at a position above the motor (head portion of the main body 101), and a charging connector connected to the battery 103, are housed, and this charging connector is connected to the pipette side electrodes 102.

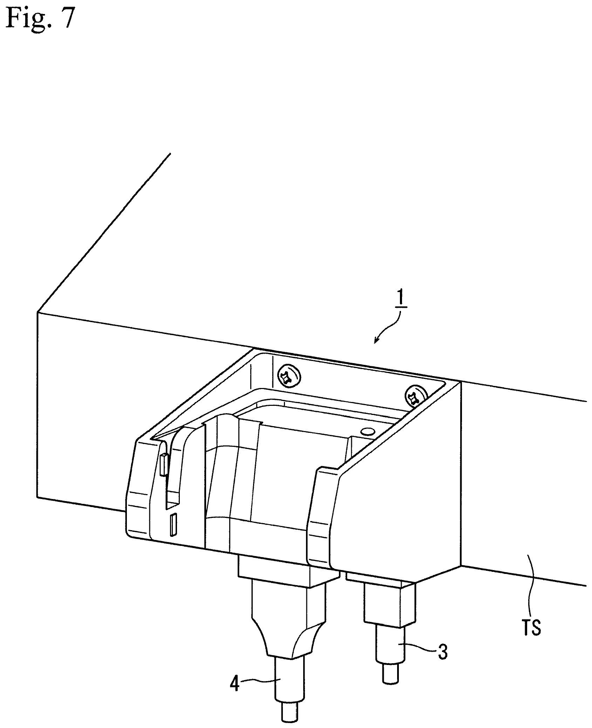

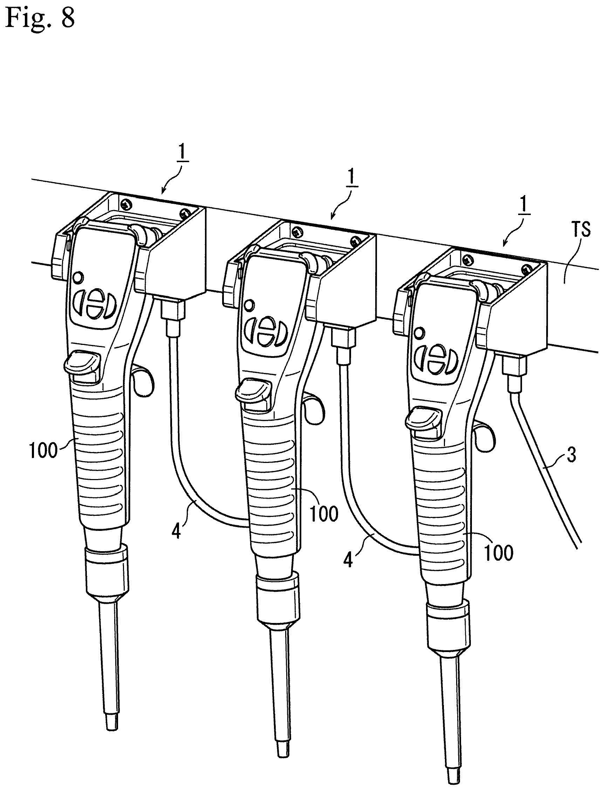

The battery charger 1 includes, in appearance, a pipette receiver 11, a left arm 12, and a right arm 13. In this specification, in a configuration of the battery charger 1, the upper, lower, left, and right sides, and front and rear surfaces are described based on a posture during use (the attached state shown in Fig. 7 and Fig. 8).

The pipette receiver 11 has a rectangular body that has a front surface 11f formed in a skirt shape widened from the upper side toward the lower side (refer to Fig. 4), and a rear surface 11b formed with a vertical plane (refer to Fig. 2 and Fig. 4). The rear surface 11b of the pipette receiver 11 acts as a fixing part 14. This is described later.

As shown in Fig. 3, etc., a pipette receiver lower surface 11d serves as a connector part 15. In the connector part 15, a power delivering port 16 and a power relay port 17 are formed. The power delivering port 16 is formed on the right side on the pipette receiver lower surface 11d, and the power relay port 17 is formed on the left side. On an upper surface 11u of the pipette receiver 11, a light emitting indicator 25 described later is formed.

From the left and the right of the pipette receiver 11, a pair of left arm 12 and right arm 13 are formed to extend forward of the pipette receiver 11. The left arm 12 and the right arm 13 are disposed at a distance enabling them to house the head portion of the electric pipette 100. A recessed portion 12a and a recessed portion 13a having valley shapes are formed on inside surfaces of either the left arm 12 and the right arm 13 (refer to Fig. 1 and Fig. 3), and to the bottom portions of the recessed portion 12a and the recessed portion 13a, charging electrodes 18 to be brought into contact with the pipette side electrodes 102 of the electric pipette 100 are exposed.

In the body of the pipette receiver 11, a substrate 20 is disposed, and on the substrate 20, various electronic components forming a circuit of a charging part 27 described later are mounted. On the substrate 20, a power delivering connector 22 (USB female-side connector) for power input and a power relay connector 23 (mini USB female-side connector) for power output are mounted. To the substrate 20, an L-shaped metal wiring body 21 (shown with shading in Fig. 4) is pressure-welded and fixed, and this metal wiring body 21 is directly screwed to an upper case 31 and extends toward the left arm 12 and the right arm 13 to form the charging electrodes 18.

At tip end side peripheral portions of the power delivering connector 22 and the power relay connector 23, surrounding walls 19 extending downward from the pipette receiver lower surface 11d are formed (refer to Fig. 3 and Fig. 4).

The power delivering connector 22 and the power relay connector 23 serve as a power delivering port 16 and a power relay port 17 formed in the connector part 15 on the pipette receiver lower surface 11d.

To the power delivering port 16, a power supply cable 3 or a relay cable 4 is connected. To the power relay port 17, a relay cable 4 is connected as necessary. To the power supply cable 3, an AC/DC adapter 5 is connected, and the battery charger 1 can be supplied with electricity from a standard commercial power supply 6 via the AC/DC adapter 5. The battery charger 1 can be connected to another battery charger 1 by using a relay cable 4 one side of which is a power delivering connector (USB male-side connector) and the other side of which is a power relay connector (mini USB male-side connector). This expanded use is described later.

The battery charger 1 including the above-described constituent elements are formed of a vertical structure including the upper case 31 and the lower case 32 as shown in Fig. 5. The upper case 31 and the lower case 32 are preferably molded from a resin with chemical resistance, for example, ABS, PP, or the like.

The lower case 32 includes the pipette receiver lower surface 11d, the surrounding walls 19 and 19, left and right hook portions 33 and 33 that are portions of the lower surfaces of the left arm 12 and the right arm 13, and a rear hook portion 34 (refer to Fig. 4 for the rear hook portion 34). The lower case 32 is preferably integrally molded so as to include these constituent elements.

The upper case 31 includes the pipette receiver front surface 11f, the rear surface 11b, the upper surface 11u, the left arm 12, and the right arm 13. On lower surfaces of the left arm 12 and the right arm 13 of the upper case 31, hook grooves 35 and 35 to house and fix the left and right hook portions 33 and 33 are formed. On the pipette receiver rear surface 11b of the upper case 31, an engagement hole 36 that lance-engages with the rear hook portion 34 is formed. In the pipette receiver upper surface 11u of the upper case 31, a light transmission hole 37 for defining the light emitting indicator 25 is formed (refer to Fig. 2). The light emitting indicator 25 transmits light emitted from an LED 26 described later through the light transmission hole 37, and is formed by, for example, affixing a label (not shown) having a translucent portion onto the pipette receiver upper surface 11u so that the light transmission hole 37 is sealed.

The rear surface of the upper case 31, that is, the pipette receiver rear surface 11b is formed into a vertical wall shape extending upward to be higher than the pipette receiver upper surface 11u, and has a vertical wall portion 38 (refer to Fig. 1), and left and right side surfaces of the upper case 31 are formed in stringer shapes from the vertical wall portion 38 to the left arm 12 and the right arm 13. In the vertical wall portion 38, screw holes 39 and 39 are formed at two left and right positions. The upper case 31 is preferably integrally molded so as to include these constituent elements.

The battery charger 1 is formed by fixing the left and right hook portions 33 of the lower case 32 to the hook grooves 35 of the upper case 31 and fixing the rear hook portion 34 of the lower case 32 to the engagement hole 36 of the upper case 31. At this time, the outer peripheral portion 32s of the lower case 32 comes entirely into contact in the peripheral direction with the inner peripheral portion 31s of the upper case 31, and the lower case 32 is housed in the upper case 31 (refer to Fig. 5 and Fig. 4).

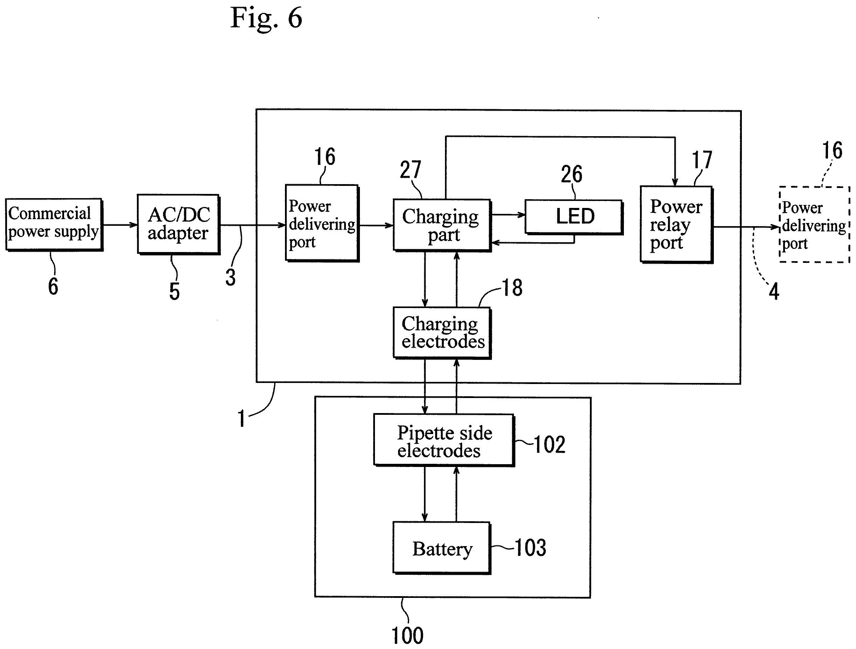

Next, Fig. 6 is a configuration block diagram of the battery charger 1. The battery charger 1 includes the above-described power delivering port 16, power relay port 17, charging electrodes 18, LED 26 constituting the light emitting indicator 25, and a charging part 27.

The battery charger 1 is connected to a standard and general commercial power supply 6 via the power supply cable 3 having the AC/DC adapter 5. The AC/DC adapter 5 has a rectifying circuit, and supplies a DC power to the power delivering port 16. The power delivering port 16 is connected to the charging part 27, and the charging part 27 is connected to the charging electrodes 18. The charging electrodes 18 are electrically connected to the battery 103 of the electric pipette 100 by contact with the pipette side electrodes 102.

The charging part 27 has a charging circuit including a capacitor to be charged by the DC power and a regulator that controls a charging voltage, etc., a constant voltage circuit including a Zener diode, etc., and an output circuit. To the charging part 27, the LED 26 is connected in parallel. The LED 26 is mounted on a necessary position on the substrate 20, and is energized and emits light during a charging operation of the charging part 27, and is not energized and does not emit light when no electricity is supplied from the power supply side. To the charging part 27, the power relay port 17 is connected in parallel.

### (First Usage Example)

A preferred usage example of the battery charger 1 configured as described above is shown. Fig. 7 is a view showing a first usage example of the battery charger 1.

The rear surface 11b of the pipette receiver 11 of the battery charger 1 can be brought into contact with and fixed to a peripheral side surface TS of a popularized work table, testing bench, shelf, or the like by using a double-sided adhesive tape or screws. In the first usage example, the battery charger 1 is fixed by using a double-sided adhesive tape. In this state, when the battery charger 1 is connected to a commercial power supply 6 by the power supply cable 3 and the electric pipette 100 is fitted from above into a space surrounded by the pipette receiver 11 and the left and right arms 12 and 13, the head portion of the electric pipette 100 is slid and guided on the slope of the pipette receiver front surface 11f, and the pipette side electrodes 102 are suspended by the recessed portions 12a and 13a of the left and right arms 12 and 13, and the electric pipette 100 is hung on and held by the battery charger 1. At the same time, the pipette side electrodes 102 of the electric pipette 100 and the charging electrodes 18 of the battery charger 1 are electrically connected to each other, and accordingly, charging is started.

The battery charger 1 according to the present embodiment has a simple configuration in which the left and right arms 12 and 13 serving as a charging part and the pipette receiver 11 hold the electric pipette 100 in a hung-down state, and the rear surface 11b of the pipette receiver 11 is used as the fixing part 14 as it is, so that the battery charger 1 can be configured compact in size.

The battery charger 1 can be easily attached to a portion having a vertical plane, such as a peripheral side surface TS of a popularized work table or the like by using the fixing part 14 being a vertical plane, so that the battery charger 1 has a high degree of installation freedom.

In the battery charger 1, the connector part 15 is set on the pipette receiver lower surface 11d, so that the electric pipette 100 held in front of the pipette receiver 11 does not interfere with the power supply cable 3 and the relay cable 4, and in addition, a sample liquid adhering to the electric pipette 100 can be positionally prevented from splattering on the power delivering port 16 and the power relay port 17. Further, around the power delivering port 16 and the power relay port 17, surrounding walls 19 are formed, so that a sample liquid adhering to the electric pipette 100 can also be structurally prevented from splattering on the power delivering port 16 and the power relay port 17.

The battery charger 1 is formed to have a vertical structure in which the lower case 32 is housed in the upper case 31, so that even if a sample liquid splatters on the battery charger 1 when the electric pipette 100 is fitted to the battery charger 1, the liquid adhering to the upper case 31 runs down the upper case 31 and directly drips down. In this regard, the power delivering port 16 and the power relay port 17 can be protected, and entrance of a liquid into the inside of the battery charger 1 can be prevented.

During charging by the battery charger 1, the light emitting indicator 25 of the pipette receiver upper surface 11u emits light, so that charging ON/OFF states can be notified at a highly visible position.

### (Second Usage Example)

Next, Fig. 8 is a view showing a second usage example of the battery charger 1. The battery charger 1 includes the power delivering port 16 and the power relay port 17, so that battery chargers 1 and 1' can be connected in series. Therefore, a plurality of battery chargers 1 are fixed to a peripheral side surface TS of the same work table or the like, and the power delivering port 16 of one battery charger 1 and the power relay port 17 of another battery charger 1' are connected by the relay cable 4. Accordingly, a plurality of electric pipettes 100 can be simultaneously charged (depending on a power supply capacity of the commercial power supply 6).

### (Third Usage Example)

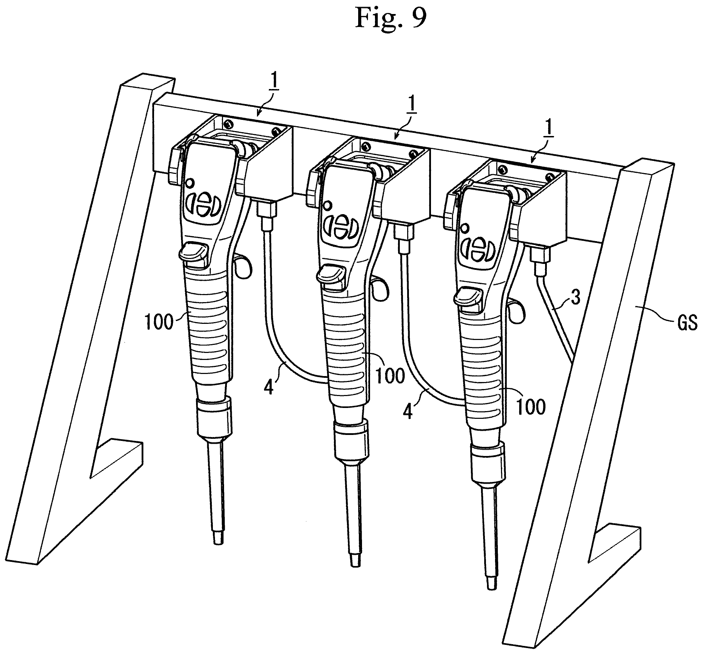

Fig. 9 is a view showing a third usage example of the battery charger 1. In the third usage example, a plurality of battery chargers 1 are screwed and fixed to a general-purpose stand GS by using screw holes 39 and 39, and the power delivering port 16 of one battery charger 1 is connected to the power relay port 17 of another battery charger 1' by the relay cable 4. As in the second usage example, a plurality of electric pipettes 100 can be simultaneously charged (depending on a power supply capacity of the commercial power supply 6).

Since the usage forms of the first to third usage examples can be adopted for the battery charger 1, the installation location of the battery charger 1 can be selected without being limited by the position of the commercial power supply 6. In addition, since the usage forms of the second and third usage examples can be adopted, battery chargers 1 each having a charging function independently of each other can be unitized and made to function as a plurality of charging stations, and even if any one of the battery chargers 1 malfunctions, the one battery charger 1 is removed and replaced with a new one, so that the battery chargers can be provided with expandability and high convenience. When the battery chargers 1 are used in the form of the second or third usage example, the power delivering port 16 and the power relay port 17 are connectors (power delivering connector 22 and power relay connector 23), and the usage form is obtained just by inserting plugs of the relay cable 4 in these connectors, so that an expanded function can be easily used at a user level.

The above-described shape of the battery charger 1 is an example, and the battery charger 1 according to the present invention does not use a stand type but is characterized in that constituent elements that charge and hold the electric pipette 100 directly have a fixing part. As long as this characteristic is kept, various modifications of the present invention based on knowledge of persons skilled in the art, for example, alterations corresponding to the shape and electrode positions of the electric pipette 100, can be made, and these are included in the present invention. The battery charger 1 is formed more compact in size by adopting a configuration in which the AC/DC adapter 5 and the commercial power supply 6 are used and the charging part 27 does not have a rectifying circuit, however, other forms in which a rectification means is used and the charging part 27 of the battery charger 1 includes a rectifying circuit as well, are also included in the content of the present invention.

### BRIEF DESCRIPTION OF THE DRAWINGS

[Fig. 1] is a front perspective view of a battery charger according to an embodiment of the present invention.
[Fig. 2] is a rear perspective view of the same battery charger.
[Fig. 3] is a view showing a connector part of the same battery charger.
[Fig. 4] is a sectional view of the same battery charger.
[Fig. 5] is an exploded perspective view of the same battery charger.
[Fig. 6] is a configuration block diagram of the same battery charger.
[Fig. 7] is a view showing a first usage example of the same battery charger.
[Fig. 8] is a view showing a second usage example of the same battery charger.
[Fig. 9] is a view showing a third usage example of the same battery charger.
[Fig. 10] shows an example of an electric pipette. Reference Signs List

- 1:: Battery charger

- 11:: Pipette receiver
- 11b:: Pipette receiver rear surface
- 11d:: Pipette receiver lower surface
- 11u:: Pipette receiver upper surface
- 12:: Left arm
- 13:: Right arm
- 14:: Fixing part
- 15:: Connector part
- 16:: Power delivering port
- 17:: Power relay port
- 18:: Charging electrode
- 19:: Surrounding wall
- 25:: Light emitting indicator
- 31:: Upper case
- 32:: Lower case
- 100:: Electric pipette
- 102:: Pipette side electrode

## Claims

1. A battery charger for an electric pipette, comprising:
a pipette receiver;
left and right arms each extending forward from the pipette receiver;
a charging electrode to be in contact with a pipette side electrode exposed to outside of a main body of the electric pipette, for charging a battery of the electric pipette; and
a power delivering port for delivering electricity to the charging electrode, wherein
a rear surface of the pipette receiver is formed with a vertical plane, and the vertical plane acts as a fixing part.

2. The battery charger for the electric pipette according to Claim 1, wherein the power delivering port is provided on a lower surface of the pipette receiver.

3. The battery charger for the electric pipette according to Claim 1, wherein the power delivering port and a power relay port are provided on a lower surface of the pipette receiver.

4. The battery charger for the electric pipette according to Claim 3, wherein each of the power delivering port and the power relay port has a connector, and is capable of being connected to each other by using a cable provided with a plug.

5. The battery charger for the electric pipette according to Claim 3 or 4, wherein each of the power delivering port and the power relay port has a surrounding wall that extends downward.

6. The battery charger for the electric pipette according to any one of Claims 1 to 5, wherein the battery charger has a vertical configuration formed with an upper case and a lower case, and the lower case is formed so as to be housed in the upper case.

7. The battery charger for the electric pipette according to any one of Claims 1 to 6, wherein an light emitting indicator for showing an electric condition is provided on an upper surface of the pipette receiver.
